# EUROPÄISCHE PATENTSCHRIFT

(11) **EP 1 882 407 B1**
(45) Veröffentlichungstag und Bekanntmachung des Hinweises auf die Patenterteilung: **17.06.2009**
(21) Anmeldenummer: 07012089.4
(22) Anmeldetag: 20.06.2007
(51) Int. Cl.: A01D 90/04, A01F 29/22

(54) **Erntemaschine**
Harvester
Moissonneuse

(30) Priorität: 27.07.2006 DE 102006034799
(43) Veröffentlichungstag der Anmeldung: 30.01.2008
(73) Patentinhaber: Alois Pöttinger Maschinenfabrik Ges. m.b.H., 4710 Grieskirchen (AT)
(72) Erfinder: Aumayr, Klaus, Dipl.-Ing., 4612 Scharten (AT); Menzl, Herbert, Ing., 4600 Wels (AT); Edlbauer, Karl, Ing., 4710 Grieskirchen (AT); Baldinger, Martin, Dr., Dipl.-Ing., 4722 Peuerbach (AT)
(74) Vertreter: Thoma, Michael

(56) Entgegenhaltungen:
- DE-A1- 3 813 908
- DE-A1-2102004 037 21
- DE-U1-3202004 004 13

## Beschreibung

Die vorliegende Erfindung betrifft eine Erntemaschine, insbesondere Ladewagen zum Aufnehmen und Transport von Erntegut, mit einer Aufnahmevorrichtung zur Erntegutaufnahme vom Boden, einem an die Aufnahmevorrichtung anschließenden Förderkanal, der in einen Erntegutspeicher führt, einer Schneideinrichtung mit zumindest einem Messer zum Zerschneiden des im Ladebetrieb durch den Förderkanal geförderten Ernteguts, sowie einer Messerschärfvorrichtung zum Schärfen des Messers, wobei das Messer im Ladebetrieb stehend zumindest mit einer Schneide in den Förderkanal hineinragt und zum Zwecke des Schärfens mit der genannten Schneide aus dem Förderkanal herausbewegbar gelagert ist.

Ladewagen mit im Ladebetrieb stehenden Messern besitzen üblicherweise säbelförmig gekrümmt ausgebildete Schneiden an den Messern, die sich in Förderrichtung durch den Förderkanal betrachtet zunehmend weiter in den Kanal hinein erstrecken, wodurch ein kontinuierlich, sanft ansteigender Schneidendruck erreicht, eine gute Schnittleistung bewirkt und eine schonende Futterzerschneidung gewährleistet wird. Das Futter wird trotz des Zerschneidens wenig beschädigt, wobei sich eine solche im Ladebetrieb stehende Messeranordnung gleichzeitig durch ihren einfachen Aufbau auszeichnet.

Ein derartiger Ladewagen ist beispielsweise aus der DE 20 2004 004 133 U1 bekannt. Dabei sind eine Vielzahl von Messern auf einem gemeinsamen Messerbalken gelagert, der beweglich aufgehängt ist, so dass er abgesenkt und damit die Messer aus dem Förderkanal herausgefahren werden können. In dieser herausgefahrenen Stellung kann ein an einem Schwenkarm aufgehängter Schleifer über die Schneide der Messer fahren, wobei der genannte Schwenkarm über eine Quertraverse verfahrbar ist, so dass der Schleifer Messer für Messer schleifen kann. Wird der Messerbalken hingegen in die Betriebsstellung geschwenkt, ragen die Messer in den Förderkanal und wirken dort mit der Fördervorrichtung zusammen.

Auch wenn bei dem bekannten Ladewagen gemäß DE 20 2004 004 133 U1 ein Schärfen der Messer auch während der Fahrt möglich ist, muss doch der Ladebetrieb unterbrochen werden oder zumindest im Ladebetrieb auf das Zerschneiden des Ernteguts verzichtet werden, da die Messer zum Zwecke des Schärfens aus dem Förderkanal herausgeschwenkt werden müssen. Insofern kann es zu Betriebsverzögerungen kommen.

Im Gegensatz zu solchen Ladewagen mit im Ladebetrieb stehenden Messern wurden andererseits Ladewagen mit im Ladebetrieb rotierenden Messern vorgeschlagen, bei denen die Messer kontinuierlich während des Ladebetriebs geschliffen werden können. Einen solchen Ladewagen zeigt die DE 10 2004 037 212 A1. Dabei bildet das Messer eine kreisförmige Scheibe, deren Umfang eine umlaufende, ggf. mit einer Vielzahl von Schneidzacken versehene Schneide bildet. Dieses kreisförmige Schneidblatt ragt mit einem Umfangsabschnitt in den Förderkanal hinein und wird nach Art einer Kreissäge rotierend angetrieben, um eine ausreichende Schneidleistung mit noch vernünftigen Schnittkräften zu erzielen. Trotz der rotierenden Antriebsbewegung bleibt der Schnitt im Vergleich zu stehenden Messern mit säbelförmiger, konvexer Schneide jedoch weniger futterschonend, da aufgrund der kreisförmigen Schneidengeometrie am Anschnittspunkt, d.h. dem am weitesten stromauf im Förderkanal liegenden Messerabschnitt, ein relativ steiler Anstellwinkel der Schneide gegeben ist. Von Vorteil ist allerdings bei derartigen kreissägenähnlich rotierenden Messern, dass der außerhalb des Förderkanals liegende Abschnitt des Schneidblatts kontinuierlich geschliffen werden kann. Es braucht lediglich ein Schleifstein oder dergleichen außerhalb des Förderkanals an das Schneidblatt gefahren werden, an dem die Schneide durch die Rotationsbewegung des Schneidblatts kontinuierlich vorbei gefahren wird. Ferner zeigt die DE 3813908 einen Häcksler mit rotierend angetriebenen Messern mit von der Kreisform abweichender Kontur.

Der vorliegenden Erfindung liegt demgegenüber die Aufgabe zugrunde, eine verbesserte Erntemaschine mit im Ladebetrieb stehenden Messern zu schaffen, der Nachteile des Standes der Technik vermeidet und letzteren in vorteilhafter-Weise weiterbildet. Vorzugsweise soll der sanfte Schnitt der im Ladebetrieb stehenden Messer erhalten bleiben, jedoch gleichzeitig das Schleifen der Messer auch im Ladebetrieb ermöglicht werden.

Erfindungsgemäß wird diese Aufgabe durch eine Erntemaschine gemäß Anspruch 1 gelöst. Bevorzugte Ausgestaltungen der Erfindung sind Gegenstand der abhängigen Ansprüche.

Erfindungsgemäß wird also vorgeschlagen, dass das Messer über seinen Umfang versetzt mehrere Schneiden aufweist und um eine Messerdrehachse drehbar gelagert ist, dass eine Schaltvorrichtung zum rotatorischen Weiterschalten des Messers von einer ersten Betriebsstellung, in der eine erste Schneide in seiner Schneidstellung im Förderkanal steht, in eine zweite Betriebsstellung, in der die erste Schneide außerhalb des Förderkanals in einer Schleifposition liegt und eine zweite Schneide in der Schneidstellung im Förderkanal steht, vorgesehen ist, und dass die Messerschärfvorrichtung derart ausgebildet ist, dass während des Ladebetriebs die in der Schleifposition außerhalb des Förderkanals stehende Schneide schleifbar ist. Das Messer bildet sozusagen ein plattenförmiges Revolvermagazin, das mehrere Schneiden bereithält und nach Abnutzung der gerade aktiven, im Förderkanal liegenden Schneide mit einer frischen Schneide in den Förderkanal drehbar ist, die dann in der neuen, wiederum ruhenden Betriebsstellung im Förderkanal steht und hierdurch einen sanften Erntegutschnitt bewirkt. Das Messer besitzt dabei so viele Betriebsstellungen wie Schneiden, wobei in jeder Betriebsstellung eine Schneide in der im Förderkanal vorgesehenen Schneidstellung ist und zumindest eine weitere Schneide außerhalb des Förderkanals in der Schärfstellung bereitgehalten wird, um dort geschärft zu werden. Während mit der einen Schneide geschnitten wird, kann die andere Schneide geschärft werden. Hierdurch kann der Ladewagen kontinuierlich im Ladebetrieb betrieben werden bzw. können die Unterbrechungen des Ladebetriebs bzw. die Beeinträchtigungen des Ladebetriebs auf den kurzen Moment alleine beschränkt werden, in dem das Messer weitergeschaltet wird. Der Ladebetrieb braucht hingegen nicht mehr für die Zeit unterbrochen werden, die notwendig ist, um eine Schneide zu schärfen. Gleichzeitig braucht der sanfte Schnitt von stehenden Messern nicht geopfert werden. Im Gegensatz zu auch im Ladebetrieb rotierenden Messern steht die Schneide in der jeweiligen ruhenden Betriebsstellung im Förderkanal, so dass die an sich bekannte Schnittkinematik stehender Messer beibehalten werden kann.

Die Geometrie der mehreren Schneiden des zumindest einen Messers kann grundsätzlich verschieden ausgebildet sein. Vorzugsweise jedoch sind die Schneiden des Messers jeweils säbelförmig, konvex gekrümmt, insbesondere derart, dass die jeweils in der Schneidstellung im Förderkanal befindliche Schneide in Förderrichtung betrachtet von der Förderkanalwand, durch die hindurch das Messer in den Förderkanal ragt, stetig zunehmend weiter in den Förderkanal hineinragt. Die Steigung der Schneide gegenüber der Förderrichtung durch den Förderkanal kann vom Anschnittpunkt, d.h. im in Förderrichtung am weitesten stromauf liegenden Schneidenpunkt, bis zum Schneidenende hin kontinuierlich zunehmen, wobei am Anschnittspunkt die Schneide näherungsweise tangential in die Förderkanalwandung übergehen kann. Hierdurch wird ein stetig zunehmender Schneiddruck erzielt, der einen sanften Schnitt bewirkt und eine futterschonende Erntegutaufnahme gewährleistet. Zudem ergibt sich eine große wirksame Schneidenlänge, die insgesamt eine gleichmäßige, geringe Schneidenabnutzung mit sich bringt.

Grundsätzlich ausreichend ist es, wenn jedes Messer zwei Schneiden besitzt, so dass zumindest eine Schneide in Schneidenstellung und zumindest eine Schneide in Schärfstellung gehalten werden kann. Vorzugsweise jedoch besitzt das Messer drei oder mehr Schneiden, insbesondere umfasst es vier Schneiden. Dies erlaubt es ggf. ein Messer auch dann weiter zu schalten und erneut eine geschärfte Schneide zum Einsatz zu bringen, wenn für einen Schärfvorgang noch keine Zeit war. Alternativ oder zusätzlich können ggf. auch unterschiedliche Schneidenkonfigurationen für unterschiedliches Futtergut und Einsatzzwecke bereitgehalten und zum Einsatz gebracht werden. Das Messer kann dabei beim Weiterschalten um jeweils den Teilungswinkel zwischen zwei benachbarten Schneiden weitergeschaltet werden. Dabei muss jedoch nicht zwangsweise um nur eine Schneide weitergeschaltet werden, es kann vielmehr auch um mehr als eine Schneide weitergeschaltet werden, d.h. es kann beispielsweise von der ersten auf eine dritte Schneide oder in ähnlicher Weise auf eine andere geschärfte Schneide weitergeschaltet werden.

In vorteilhafter Weiterbildung der Erfindung sind die Schneiden zueinander zumindest paarweise bezüglich der Messerdrehachse rotationssymmetrisch angeordnet, so dass sie durch Drehung des Messers um die Messerdrehachse um einen vorbestimmten Winkel imaginär zur Deckung gebracht werden können.

Vorteilhafterweise umfasst die Schaltvorrichtung zum rotatorischen Weiterschalten der Messer eine Drehverriegelungsvorrichtung zum vorzugsweise formschlüssigen Drehverriegeln der Messer in der jeweiligen Betriebsstellung. Diese Drehverriegelungsvorrichtung kann grundsätzlich verschieden ausgebildet sein. Nach einer bevorzugten Ausführung der Erfindung hält die Drehverriegelungsvorrichtung das jeweilige Messer an dessen Außenumfang bzw. in einem umfangsnahen Randabschnitt. Das Messer kann hierzu an seinem Umfang zwischen den Schneiden Verriegelungsabschnitte umfassen, mit denen ein Riegelelement der Drehverriegelungsvorrichtung in Eingriff bringbar ist. Eine solche umfangsnahe Drehverriegelung besitzt einen günstigen Hebelarm, mittels dessen das Messer mit geringen Kräften drehfest in der jeweiligen Betriebsstellung gehalten werden kann.

Insbesondere können die vorgenannten Verriegelungsabschnitte jeweils eine Rastmulde und/oder einen Rastvorsprung aufweisen, mit der bzw. mit dem eine Rastklinke in Eingriff bringbar ist, die vorzugsweise radial in die Rastmulde bzw. auf den Rastvorsprung aufschnappbar ist, wobei die Rastklinke vorteilhafterweise in Form einer Eingriffsrolle ausgebildet sein kann, die in die Rastmulde paßgenau hineinrollen kann. Die Rastklinke kann hierbei federvorgespannt auf ihre verriegelnde Stellung hin vorgespannt sein, wobei der Eingriffsabschnitt bzw. die Eingriffsrolle der Rastklinke und/oder der Verriegelungsabschnitt am Messer derart ausgebildet sein kann, dass ein Weiterdrehen des Messers in die nächste Betriebsstellung vorzugsweise entsprechend der Förderrichtung im Förderkanal unter Lösen der Rastklinke möglich ist. Das Weiterdrehen kann beispielsweise durch die vom vorbeigleitenden Erntegut bewirkten Schnittkräfte bewirkt werden. Alternativ oder zusätzlich kann ein geeigneter Stell- bzw. Drehantrieb für die Messer vorgesehen sein. Hierbei kann die vorgenannte Rastmulde und die diese rechts und links begrenzenden Rastvorsprünge zu einer Seite hin einen sanften Anstieg, der ein entsprechend sanftes Einschnappen der Rastklinke ermöglicht, und auf der anderen Seite einen steilen, die Rastklinke in der Verriegelungsstellung haltenden und die Schnittkräfte abfangenden Anstieg umfassen. Beim Weiterschalten und Erreichen der nächsten Betriebsstellung fällt die Rastklinke in die Rastmulde, in der sie dann das Messer formschlüssig hält, insbesondere entgegen den an der Schneide bewirkten Schnittkräften.

Nach einer bevorzugten Ausführung der Erfindung umfasst die Schaltvorrichtung eine Sicherheits-Auslösevorrichtung, mittels derer bei übergroßen Schnittkräften, beispielsweise bei einem im Erntegut befindlichen Stein, ein automatisches Auslösen des Messers trotz der vorgenannten Drehverriegelung möglich ist, d.h. das Messer fährt bei übergroßen Schnittkräften selbsttätig aus dem Förderkanal, so dass eine Beschädigung des Messers und/oder der Fördervorrichtung verhindert ist. Die Sicherheitsauslösevorrichtung kann hierbei ein rotatorisches und/oder ein translatorisches Herausfahren des Messers aus dem Förderkanal erlauben.

Insbesondere kann die Sicherheitsauslösevorrichtung eine translatorisch quer zur Messerdrehachse bewegliche Lagerung der genannten Messerdrehachse umfassen, so dass das um die Messerdrehachse drehbar gelagerte Messer quer zur Messerdrehachse ein Stück weit aus dem Förderkanal herausgeschoben werden kann, wenn bei einer Verstopfung oder Fremdkörpern im Erntegut die Schnittkräfte übermäßig ansteigen. Diese translatorische Verschiebbarkeit kann begrenzt sein und eine Auslösebewegung bilden, die die Drehverriegelung des Messers bzw. der Messer löst, so daß ein Wegdrehen der Messer ermöglicht wird.

Die der Messerdrehachse zugeordneten Drehachsen-Auslösemittel können grundsätzlich verschieden ausgebildet sein. Nach einer vorteilhaften Ausführung der Erfindung kann ein Messerdrehachsenhalter vorgesehen sein, der radial verschieblich ist und dabei vorteilhafterweise eine Federeinrichtung aufweist, mittels derer die Messerdrehachse in ihre Betriebsstellung bzw. zur Betriebsstellung hin vorgespannt ist. Übersteigen die vorgenannten Schnittkräfte ein vorbestimmtes Maß, kann der Messerdrehachsenhalter entgegen der Federkraft zurückfallen, wodurch das Messer aus dem Förderkanal fährt. Alternativ oder zusätzlich kann dem genannten Messerdrehachsenhalter ein Riegel zugeordnet sein, der im Normalbetrieb die Messerdrehachse in der vorgesehenen Betriebsstellung verriegelt, bei Überschreiten der vorbestimmten Schnittkräfte jedoch auslöst und die Messerdrehachse freigibt, so dass diese entlang dem vorgesehenen translatorischen Weg quer zur Messerdrehachse wegfahren kann.

In Weiterbildung der Erfindung kann die Auslösevorrichtung ein kombiniertes translatorisches Wegfahren der Messerdrehachse und ein Wegdrehen des Messers um die Messerdrehachse vorsehen. Hierzu können die vorgenannten Drehachsenauslösemittel und die Drehverriegelungsvorrichtung, die an sich eine rotatorische Verriegelung des Messers in der jeweiligen Schaltstellung bewirkt, miteinander gekoppelt sein. Die entsprechende Koppeleinrichtung löst dann, wenn die Drehachsen-auslösemittel die Drehachse translatorisch freigeben, auch die Drehverriegelungsvorrichtung, so dass sich das Messer gleichzeitig bzw. zusätzlich drehen kann. Durch eine solche kombinierte Auslösebewegung kann ein besonders rasches Herausbewegen der vorteilhafterweise säbelförmigen Schneide aus dem Förderkanal erreicht werden.

Das Schärfen der jeweils aus dem Förderkanal herausgedrehten Schneide kann grundsätzlich in verschiedener Weise erfolgen. Denkbar wäre es, ein materialverdrängendes, die Schneidkanten der jeweiligen Schneide ausformendes Schärfwerkzeug vorzusehen. In Weiterbildung der Erfindung jedoch kann die Schärfvorrichtung insbesondere zumindest einen Schleifer umfassen, mit dem die Schneiden der Messer geschliffen werden können. Dabei kann dem Schleifer in an sich bekannter Weise ein Stellantrieb zugeordnet sein, der das Schleifwerkzeug entlang der ggf. säbelförmigen, konvex gekrümmten Schneide hin und her fährt und bei Vorhandensein mehrerer Messer den Schleifer parallel zu einem die Messer tragenden Messerbalken von Messer zu Messer weiterfährt.

Ist in der vorgenannten Weise eine Sicherheitsauslösevorrichtung für die Messer vorgesehen, ist vorteilhafterweise vorgesehen, dass beim Auslösen eines oder mehrerer Messer auch die Schärfvorrichtung wegfährt. Hierzu kann eine Koppelung zwischen Sicherheitsauslösevorrichtung und Stellantrieb der Schärfvorrichtung vorgesehen sein.

Es versteht sich, dass das zumindest eine Messer nicht nur zum Zwecke des Schärfens weitergeschaltet werden kann. Alternativ oder zusätzlich kann auch ein automatisches Weiterdrehen der Scheiben unabhängig von der Schneidstärke erfolgen, um eine gleichmäßige Abnutzung der Schneiden zu ermöglichen. Die Parameter für ein solches automatisches Weiterdrehen können verschiedene sein, insbesondere kann das Weiterschalten der Messer in Abhängigkeit der Betriebszeit des Ladewagens bzw. seiner Aufnahmevorrichtung, eines Erntegutdurchsatzes, einer Fuhrenanzahl, eines Erntegutgewichts und dergleichen gesteuert werden.

Das Schärfen der Messer kann ebenfalls in unterschiedlicher Weise gesteuert werden. Gemäß einer einfachen Ausbildung der Erfindung kann ein Schärfvorgang immer dann vorgesehen und die Schärfvorrichtung immer dann in Betrieb gesetzt werden, wenn ein Weiterschalten der Messer erfolgt ist, beispielsweise in Abhängigkeit eines der vorgenannten Parameter.

Alternativ oder zusätzlich kann jedoch auch das Weiterschalten in Abhängigkeit der Messerschärfe gesteuert werden und das Schärfen einer Schneide in Abhängigkeit des Schärfegrads dieser Schneide gesteuert werden. Hierzu können Erfassungsmittel zur Erfassung der Schneidenschärfe vorgesehen sein, die grundsätzlich verschieden ausgebildet sein können. Beispielsweise kann der Schnittdruck erfasst werden, so dass beispielsweise dann, wenn ein durchschnittlicher Schnittdruck ein vorbestimmtes Maß übersteigt, ein Schärfvorgang eingeleitet wird. Alternativ oder zusätzlich kann ein Schärfen automatisch auch dann eingeleitet werden, wenn ein besonderes Ereignis festgestellt wird, beispielsweise ein sprunghaftes Ansteigen des Schnittdrucks erfasst und/oder eine Sicherheitsauslösung der Messer erfasst wird, was darauf hindeutet, dass ein Stein gegen die Messer geschlagen ist. Selbstverständlich können auch manuell betätigbare Steuermittel zum Starten der Schaltvorrichtung und der Schärfvorrichtung vorgesehen sein, um immer dann einen Schärfvorgang zu initialisieren, wenn vom Maschinenführer bei Überprüfung der Messer eine mangelnde Schärfe festgestellt wird.

Die Erfindung wird nachfolgend anhand eines bevorzugten Ausführungsbeispiels und zugehöriger Zeichnungen näher erläutert. In den Zeichnungen zeigen:
- Fig. 1:: eine Seitenansicht eines von einem Schlepper gezogenen Ladewagens nach einer bevorzugten Ausführung der Erfindung,
- Fig. 2:: eine Seitenansicht eines Messers der Schneidvorrichtung und des Förderkanals nebst der darin vorgesehenen Fördereinrichtung im Erntegutaufnahmebereich des Ladewagens aus Fig. 1,
- Fig. 3:: eine perspektivische, ausschnittsweise Seitenansicht der Schneidvorrichtung aus Fig. 2, und
- Fig. 4:: eine perspektivische, ausschnittsweise Ansicht der Schneideinrichtung ähnlich Fig. 3, jedoch aus einem anderen Blickwinkel.

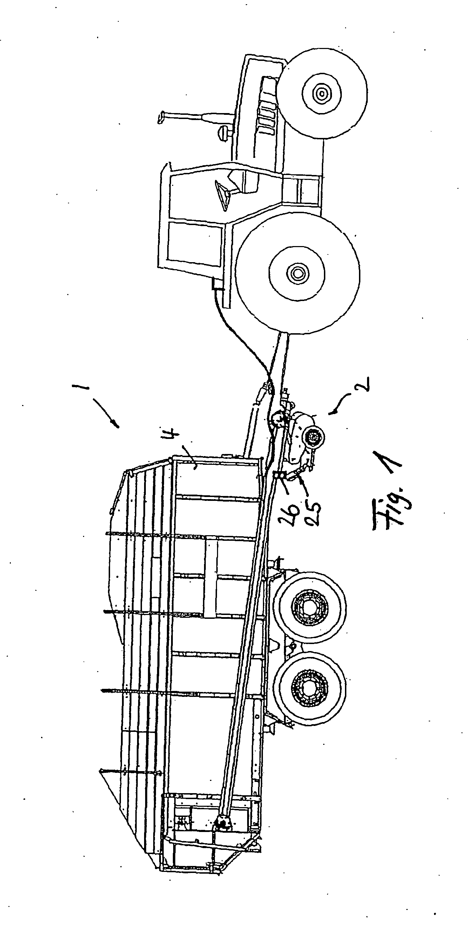

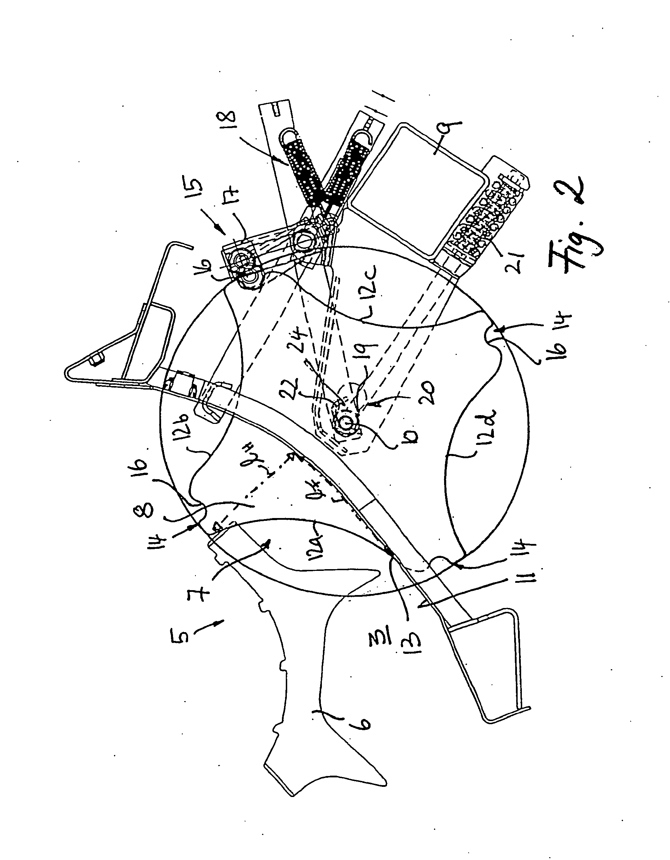

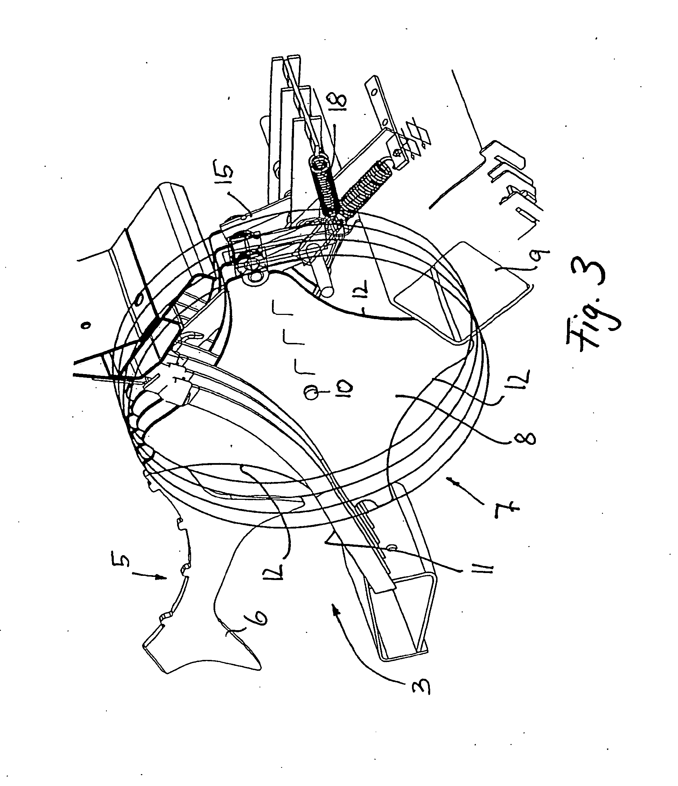

Die in Figur 1 gezeigte Erntemaschine in Form eines Ladewagens 1, die ggf. auch in Form einer vorzugsweise kontinuierlich arbeitenden Ballenpresse ausgebildet sein könnte, besitzt in an sich üblicher Weise eine Aufnahmevorrichtung 2, beispielsweise in Form einer absenk- und hochfahrbaren Pick-Up mit Stachelwalze, sowie einen daran anschließenden Förderkanal 3, der in den Erntegutspeicher 4 des Ladewagens 1 führt. In dem genannten Förderkanal 3 kann eine Fördereinrichtung 5 mit einem Rotor 6 angeordnet sein, der das von der Aufnahmevorrichtung 2 aufgenommene Erntegut durch den Förderkanal 3 in den Erntegutspeicher 4 fördert, vgl. Figur 2 und 3.

Im Bereich des Förderkanals 3 ist eine Schneideinrichtung 7 mit einer Vielzahl von Messern 8 vorgesehen, die an einem gemeinsamen Messerbalken 9 gelagert sind.

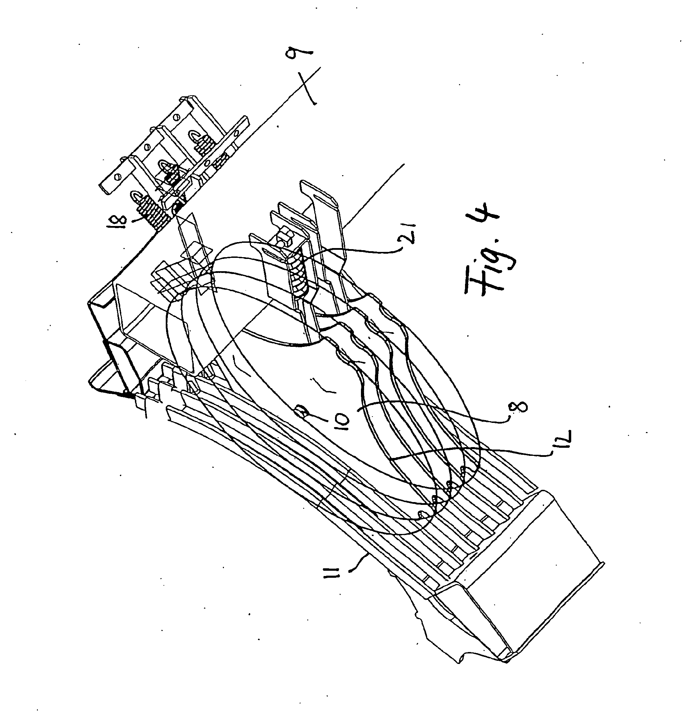

Wie die Figuren 3 und 4 zeigen, sind die im wesentlichen plattenförmig ausgebildeten Messer 8 dabei um Messerdrehachsen 10 drehbar an dem Messerbalken 9 gelagert, die sich im wesentlichen koaxial zueinander erstrecken und parallel zur Längsachse des Messerbalkens 9 angeordnet sind. Der Messerbalken 9 umfasst hierzu zwischen den Messern auskragende Messertragarme, an deren Enden die genannten Messerdrehachsen 10 gelagert sind.

Wie Figur 2 zeigt, ist die Anordnung bei der gezeichneten Ausführung dabei derart getroffen, dass sich die Messerdrehachse 10 außerhalb des Förderkanals 3 in der Nähe einer den Förderkanal 3 begrenzenden Förderkanalwandung 11 erstreckt. Die besagte Förderkanalwandung 11 besitzt schlitzartige Messer-Durchtrittsaufnehmungen, durch die hindurch die Messer 8 mit einem Abschnitt in den Förderkanal 3 hineinragen. Die Messer 8 erstrecken sich dabei zwischen den Mitnehmerarmen des Rotors 6 der Fördereinrichtung 5.

Wie insbesondere Figur 2 zeigt, umfasst jedes Messer 8 mehrere Schneiden 12, die jeweils säbelförmig konvex gekrümmt sind und abschnittsweise den Außenumfang des Messers 8 bilden. In der gezeichneten Ausführung umfassen die Messer 8 dabei vier Schneiden 12a, 12b, 12c und 12d, die sich über jeweils einen Sektor von mehr als 45° am Umfang des Messers 8 erstrecken.

Die Geometrie der Schneiden 12 ist dabei derart ausgebildet, dass die jeweils im Förderkanal 3 in Schneidstellung stehende Schneide vom Anschnittpunkt 13 aus in Förderrichtung zunehmend weiter von der Förderkanalwandung 11 weg in den Förderkanal 3 hinein erstreckt. In der gezeichneten Ausführung sind die Schneiden 12 dabei kontinuierlich steigend gekrümmt, wobei in der gezeichneten Ausführung im Anschnittpunkt 13 die Schneide 12 näherungsweise tangential in die Förderkanalwandung 11 übergeht.

Wie Figur 2 zeigt, erstreckt sich die im Förderkanal 3 stehende Schneide im wesentlichen durch die gesamte Breite des Förderkanals 3 hindurch, d.h. das stromabseitige Ende der Schneide 12 liegt im Bereich der inneren Wandung des Förderkanals 3 bzw. im Bereich des Außenumfangs des Rotors 6, vgl. Figur 2. Die Steigung der Schneide 12 ist im gezeichneten Ausführungsbeispiel dabei derart bemessen, dass die effektive Schneidenlänge I_{F} in Förderrichtung größenordnungsmäßig etwa der Schneidenhöhe I_{H} quer zur Förderrichtung durch den Förderkanal 3 entspricht, vgl. Figur 2. Es versteht sich jedoch, dass grundsätzlich andere Schneidengeometrien möglich sind.

Zwischen den Schneiden 12 sind in der gezeichneten Ausführung am Umfang der Messer 8 Verriegelungsabschnitte 14 vorgesehen, an denen die Messer 8 von einer Drehverriegelungsvorrichtung 15 in der jeweiligen Betriebsstellung gehalten werden können. Alternativ könnten die Drehverriegelungsabschnitte auch an speziellen Messerhaltern vorgesehen sein, die als separates Zwischenteil ausgebildet sein können. In der gezeichneten Ausführung arbeitet die Drehverriegelungsvorrichtung 15 formschlüssig. Jeder der Verriegelungsabschnitte 14 umfasst eine radiale Eingriffsmulde 16, in die eine komplementär geformte Verriegelungsnase einer Rastklinke 17 eingreifen kann. Wie Figur 2 zeigt, ist die Kontur der Eingriffsmulde 16 randseitig mit einem stetigen Verlauf harmonisch geformt, wobei die Verriegelungsnase der Rastklinke 17 ebenfalls einen gerundeten Eingriffsumfang besitzt. Die Verriegelungsnase kann vorteilhafterweise auch als Eingriffsrolle ausgebildet sein. Die Flanken der Eingriffsmulde 16 sind dabei zu der einen Seite hin deutlich steiler ausgebildet als zu der anderen Seite hin, vgl. Figur 2. Mit dem steileren Anstieg ist das Messer gegen die Schneidkräfte abgestützt, über den flacheren Anstieg kann die Rastklinke sanft in die genannte Rastmulde fahren. Vorteilhafterweise ist das Messer entsprechend der Förderrichtung im Förderkanal in die nächste Betriebsstellung weiterschaltbar, so daß nach Lösen der Drehverriegelung das Weiterdrehen vorteilhafterweise durch die vom vorbeigeförderten Erntegut ausgeübte Kraft auf das Messer bewirkt werden kann. Alternativ oder zusätzlich kann dem Messer ein geeigneter Drehantrieb zum Weiterschalten in die gewünschte nächste Schneidstellung zugeordnet sein.

Die besagte Rastklinke 17 ist mit einer Federeinrichtung 18 auf ihre Eingriffsstellung hin vorgespannt, so dass die Rastklinke 17 selbsttätig in die jeweilige Eingriffsmulde 16 fällt, wenn das Messer 8 in die passende Drehstellung geschaltet wird.

Wie insbesondere Figur 2 zeigt, sind die Messerdrehachsen 10 der Messer 8 translatorisch verschieblich quer zur Achsrichtung an dem Messerbalken 9 bzw. den daran vorspringenden Tragarmen gelagert. Hierzu kann an dem Messerbalken 9 bzw. den genannten vorspringenden Tragarmen eine Schiebeführung beispielsweise in Form eines Langlochs vorgesehen sein, die eine translatorische Verschiebung quer zur Förderrichtung zulässt bzw. vorgibt. In der gezeichneten Ausführung gemäß Figur 2 erstreckt sich die von der Führungsvorrichtung 19 vorgegebene Verschieberichtung der Messerdrehachsen 10 näherungsweise senkrecht zu der Kontur der im Förderkanal 3 stehenden Schneide, genauer gesagt deren mittleren Abschnitt.

Die Messerdrehachsen 10 werden dabei von einem Messerdrehachsenhalter 20 gehalten, der eine Federeinrichtung 21 umfasst, die die Messerdrehachsen 10 in ihre Betriebsstellung zum Förderkanal 3 hin vorspannt. In der gezeichneten Ausführung wirkt die Federeinrichtung 21 auf einen stabförmigen Übertrager, der verschieblich am Messerbalken 9 gelagert ist und mit der jeweiligen Messerdrehachse 10 verbunden ist. Bei Auftreffen bspw. auf einen Stein, kann hierdurch das Messer 8 zunächst entgegen der Federvorspannung der Federeinrichtung 21 translatorisch ausweichen. An diese Bewegung kann eine Auslöseeinrichtung gekoppelt sein, die vorteilhafterweise erst bei Erreichen des Endbereichs der translatorischen Verschiebbarkeit die Drehverriegelung löst, so daß das Messer unter dem Druck des Steins auch noch rotatorisch ausweichen kann.

Die Messer 8 können mit den Messerdrehachsen 10 verriegelt werden. Hierzu ist ein Messerdrehachsenriegel 22 vorgesehen, der in der gezeichneten Ausführung als Schwenkhebel ausgebildet ist. Wird der Drehachsenriegel 22 über die jeweilige Messerdrehachse 10 geschoben bzw. geschwenkt, kann das jeweilige Messer 8 nicht in Richtung der Messerdrehachse 10 von dieser herunterrutschen bzw. aus der Messerdrehachsenhalterung herausrutschen. Gleichzeitig kann der Messerdrehachsenriegel 22 eine Schiebebegrenzung zur Begrenzung der vorgenannten Verschiebbarkeit des Messers quer zur Drehachse bilden. Der u-förmige Eingriffsabschnitt 24 an dem vorderen Endabschnitt des Schwenkhebels des Messerdrehachsenriegels begrenzt in der verriegelnden Stellung des Messerdrehachsenriegels 22 die Verschiebbarkeit der Messerdrehachse 10 in der vorgenannten Langlochführung, insbesondere verhindert er ein Hineinbewegen der Drehachse in den vergrößerten Abschnitt des genannten Langlochs, in dem die Drehachse entnommen werden kann. Der Drehachsenriegel 22 kann dabei weggeschwenkt werden, wie dies Figur 2 zeigt, um das jeweilige Messer 8 freizugeben. Vorteilhafterweise löst sich bzw. entspannt sich in einem vorbestimmten Maße hierbei die an dem Schwenkhebel des Messerdrehachsenriegels 22 befestigte Federeinrichtung 18, die die Rastklinke 17 spannt, so daß ein Wechsel des jeweiligen Messers 8 bzw. der Messer leichtgängig ermöglicht wird.

Damit ergibt sich folgende Funktion: Im Betrieb steht das Messer 8 zunächst mit seiner ersten Schneide 12a in dem Förderkanal 3, wodurch in an sich bekannter Weise ein Zerschneiden des durch den Förderkanal 3 geförderten Ernteguts bewirkt wird. Nach einer vorbestimmten Zeit oder bei Erfüllung eines anderen Schaltparameters oder auch bei manueller Überprüfung und Feststellung nicht ausreichender Schärfe wird das Messer 8 um eine Schneide oder auch mehrere Schneiden weiter geschaltet, d.h. es wird solange um die Messerdrehachse 10 weitergedreht, bis die nächste oder auch eine weitere Schneide in dem Förderkanal 3 steht, so dass die frische Schneide dann wieder einen schonenden Schnitt mit geringen Schnittkräften bewirken kann.

Grundsätzlich ist ein Weiterschalten in die jeweils nächste Betriebsstellung durch manuelles Weiterdrehen der Messer 8 möglich. Um einen automatischen Betrieb zu erreichen, kann die Schaltvorrichtung einen in den Figuren nicht näher vorgesehenen Stellantrieb umfassen, durch den die Messer in Abhängigkeit eines oder mehrerer vorbestimmter Schaltparameter in die nächste Betriebsstellung weitergeschaltet werden können.

Die aus dem Förderkanal 3 herausgedrehte Schneide, in Figur 2 beispielsweise die mit 12d gekennzeichnete Schneide, kann durch eine außerhalb des Förderkanals 3 vorgesehene Messerschleifvorrichtung 25 geschärft werden. Diese Messerschleifvorrichtung 25 kann grundsätzlich verschieden ausgebildet sein. Insbesondere kann sie einen Schleifer vorzugsweise in Form eines Scheibenschleifers umfassen, der an einer beweglichen Schleiferaufhängung 26 gelagert ist, die eine Schleiferführung bildet, mit Hilfe derer der Schleifer einerseits von Messer zu Messer gefahren und andererseits entlang einer genau vorgegebenen Bewegungsbahn über die säbelförmig gekrümmte Schneide des Messers 8 gefahren werden kann. Die Schleiferaufhängung 26 kann hierzu eine Quertraverse parallel zum Messerbalken 9 sowie einen daran schwenkbar gelagerten Schwenkarm umfassen, mittels dessen die Schleifbewegung entlang der Schneide 12 erreicht werden kann. Bezüglich der weiteren Ausbildung der Messerschleifvorrichtung 25 wird auf die DE 20 2004 004 133 U1 verwiesen.

## Patentansprüche

1. Erntemaschine, insbesondere Ladewagen zum Aufnehmen und Transport von Erntegut, mit einer Aufnahmevorrichtung (2) zur Erntegutaufnahme vom Boden, einem an die Aufnahmevorrichtung (2) anschließenden Förderkanal (3), der in einen Erntegutspeicher (4) führt, einer Schneideinrichtung (7) mit zumindest einem Messer (8) zum Zerschneiden des im Ladebetrieb durch den Förderkanal (3) geförderten Ernteguts, sowie einer Messerschärfvorrichtung (25) zum Schärfen des Messers (8), wobei das Messer (8) im Ladebetrieb stehend zumindest mit einer Schneide (12) in den Förderkanal (3) hineinragt und zum Zwecke des Schärfens mit der genannten Schneide (12) aus dem Förderkanal (3) herausbewegbar gelagert ist, **dadurch gekennzeichnet, dass** das Messer (8) über seinen Umfang versetzt mehrere Schneiden (12) aufweist und um eine Messerdrehachse (10) drehbar gelagert ist, dass eine Schaltvorrichtung zum rotatorischen Weiterschalten des Messers von einer ersten Betriebsstellung, in der eine erste Schneide in der Schneidstellung im Förderkanal (3) steht, in eine zweite Betriebsstellung, in der die erste Schneide außerhalb des Förderkanals (3) in einer Schärfposition steht und eine zweite Schneide in der Schneidstellung im Förderkanal (3) steht, vorgesehen ist, und dass die Messerschärfvorrichtung (25) derart ausgebildet ist, dass während des Ladebetriebs die in der Schleifposition befindliche Schneide schärfbar ist.

2. Erntemaschine nach dem vorhergehenden Anspruch, wobei die Schneiden (12) des Messers säbelförmig konvex gekrümmt sind.

3. Erntemaschine nach einem der vorhergehenden Ansprüche, wobei die Schneiden (12) in der Schneidstellung im Förderkanal (3) von einer Förderkanalwand (11) weg, durch die hindurch das Messer (8) in den Förderkanal (3) ragt, in Förderrichtung stetig zunehmend weiter in den Förderkanal (3) hineinragen.

4. Erntemaschine nach einem der vorhergehenden Ansprüche, wobei das Messer (8) in Umfangsrichtung versetzt drei oder mehr Schneiden (12) und weniger als neun Schneiden (12), vorzugsweise drei bis sechs Schneiden (12), insbesondere vier Schneiden (12) besitzt.

5. Erntemaschine nach einem der vorhergehenden Ansprüche, wobei die Enden der Schneiden (12) eines Messers (8) auf einem gemeinsamen Kreis um die Messerdrehachse (10) angeordnet sind und/oder die Schneiden (12) eines Messers (8) rotationssymmetrisch bezüglich der Messerdrehachse (10) angeordnet sind.

6. Erntemaschine nach einem der vorhergehenden Ansprüche, wobei die Schaltvorrichtung eine Drehverriegelungsvorrichtung (15) zur vorzugsweise formschlüssigen Drehverriegelung des zumindest einen Messers (8) in den verschiedenen Betriebsstellungen aufweist.

7. Erntemaschine nach dem vorhergehenden Anspruch, wobei das Messer (8) an seinem Umfang zwischen den Schneiden (12) Verriegelungsabschnitte (14) aufweist, mit denen ein Riegelelement (17) der Drehverriegelungsvorrichtung (15) in Eingriff bringbar ist.

8. Erntemaschine nach dem vorhergehenden Anspruch 7, wobei die Verriegelungsabschnitte (14) jeweils eine Rastmulde (16) und/oder einen Rastvorsprung aufweisen und das Riegelelement (17) eine Rastklinke mit einem Eingriffsabschnitt vorzugsweise in Form einer Eingriffsrolle umfasst, die radial in die jeweilige Rastmulde und/oder auf den jeweiligen Rastvorsprung aufschnappbar ist.

9. Erntemaschine nach einem der vorhergehenden Ansprüche, wobei der Schaltvorrichtung eine Sicherheitsauslösevorrichtung zugeordnet ist, mittels derer bei Überschreiten einer vorbestimmten Schneidenbelastung das Messer aus der jeweiligen Betriebsstellung rotatorisch und/oder translatorisch aus dem Förderkanal (3) herausbewegbar ist.

10. Erntemaschine nach dem vorhergehenden Anspruch 9, wobei die Messerdrehachse (10) des zumindest einen Messers (8) translatorisch quer zur Messerdrehachse (10) verschieblich gelagert ist und die Sicherheitsauslösevorrichtung einen bei Überschreiten der vorbestimmten Schneidenbelastung auslösenden, eine translatorische Verschiebung der Messerdrehachse (10) zulassenden Messerdrehachsenauslöser aufweist.

11. Erntemaschine nach dem vorhergehenden Anspruch 10, wobei der Messerdrehachsenauslöser einen Messerdrehachsenhalter (20) mit einer Federeinrichtung (21) zur Vorspannung der Messerdrehachse (10) in eine Betriebsstellung aufweist und/oder dem Messerdrehachsenhalter (20) ein Messerdrehachsenriegel zugeordnet ist, der bei Überschreiten der vorbestimmten Schneidenbelastung auslöst.

12. Erntemaschine nach einem der vorhergehenden Ansprüche 9 - 11, wobei die Sicherheitsauslösevorrichtung eine Koppeleinrichtung zwischen dem Messerdrehachsenauslöser und der Drehverriegelungsvorrichtung (15) aufweist, die bei Auslösen des Messerdrehachsenauslösers die Drehverriegelungsvorrichtung (15) löst.

13. Erntemaschine nach einem der vorhergehenden Ansprüche, wobei die Messerschärfvorrichtung zumindest ein Schärfwerkzeug, eine Werkzeugführung sowie einen Stellantrieb für das Werkzeug aufweist, mittels dessen das Schärfwerkzeug über die in der Schleifposition stehende Schneide (12) eines Messers (8) sowie von Messer zu Messer bewegbar ist, aufweist.

14. Erntemaschine nach dem vorhergehenden Anspruch 13, wobei der Stellantrieb einen Querantrieb zur Bewegung des Schärfwerkzeugs quer zur Förderrichtung durch den Förderkanal (3) und einen Längsantrieb, insbesondere Schwenkantrieb, zur Bewegung des Schärfwerkzeugs in einer Längsebene parallel zu der Förderrichtung durch den Förderkanal (3) entlang der in der Schärfposition stehenden Schneide der Messer (8) aufweist.

15. Erntemaschine nach einem der beiden vorhergehenden Ansprüche, wobei das Schärfwerkzeug an einer Schwinge aufgehängt ist, die verschieblich und verschwenkbar an einer Quertraverse gelagert ist.

16. Erntemaschine nach einem der vorhergehenden Ansprüche 13 - 15, wobei das Schärfwerkzeug verschieblich an einer Quertraverse gelagert ist, die an einer schwenkbaren Schwinge aufgehängt ist.

17. Erntemaschine nach einem der vorhergehenden Ansprüche, wobei die Schneiden (12) jeweils eine Schneidenlänge (lₛ) von zumindest ⅛, vorzugsweise zumindest ¹/₆, der gesamten Umfangslänge des Messerkorpus (80) aufweisen.

18. Erntemaschine nach einem der vorhergehenden Ansprüche, wobei das Messer (8) insgesamt im wesentlichen ein plattenförmiges Vieleck mit konkav gekrümmten Schenkeln bildet, wobei die Anzahl der Ecken zwischen drei und sechs beträgt.

## Claims

1. Harvester, especially trailer loader for storage and transport of harvested grain crops, with a loading mechanism (2) for the uptake of the harvested grain crops from the ground, a feeder channel (3), which is attached to the loading mechanism (2) and leads to a storage tank (4) for cutting harvested grain crops, a cutting device (7) with at least one knife cutter (8) for cutting of the harvested crops that are transported through the feeder channel (3) during the loading mode of operation, as well as a knife sharpener (25) for sharpening the knife cutter (8), wherein at least one of the cutting edges (12) of the knife cutter (8) protrudes into the feeder channel (3) during the stationary loading mode of operation and is mounted in a retractable manner from the feeder channel (3) for the purpose of sharpening said cutting edge (12), **characterised in that** the knife cutter (8) is pivoted around an rotational axis (10) of the knife cutter and exhibits several cutting edges (12) that are spatially displaced from one another along the circumference of the knife cutter (8), and **in that** a displacement mechanism for rotary displacement of the knife cutter (8) from a first operational position, in which a first cutting edge (12) protrudes into the feeder channel (3), to a second operational position, in which the first cutting edge (12) is positioned in a sharpening position exterior to the feeder channel (3) and a second cutting edge (12) is positioned in the cutting position within the feeder channel (3) is provided and **in that** the knife sharpener (25) is formed in such a manner that the cutting edge (12) that is in the sharpening position can be sharpened during the loading mode of operation.

2. Harvester according to the preceding claim, wherein the cutting edges (12) of the knife cutter (8) are sabre-shaped and curved in a convex manner.

3. Harvester according to one of the preceding claims, wherein the cutting edges (12) in the cutting position within the feeder channel (3) protrude in a gradually increasing manner along the feed direction into the feeder channel (3), starting from a wall (11) of the feeder channel (3), through which the knife cutter (8) protrudes into the feeder channel (3).

4. Harvester according to one of the preceding claims, wherein the circumference of the knife cutter (8) exhibits three or more and less than nine cutting edges (12), preferably three to six cutting edges (12), especially four cutting edges (12) that are spatially displaced from one another.

5. Harvester according to one of the preceding claims, wherein the terminal ends of the cutting edges (12) of a knife cutter (8) are arranged on a common circle around the rotational axis (10) of the knife cutter (8) and/or the cutting edges (12) of a knife cutter (8) are arranged in a rotationally symmetric manner with respect to the rotational axis (10) of the knife cutter (8).

6. Harvester according to one of the preceding claims, wherein the displacement mechanism exhibits a hinge lock device (15) for preferably positive locking of the at least one knife cutter (8) for hinge locking the same in the different operational positions.

7. Harvester according to the preceding claim, wherein, along its circumference and in between its cutting edges (12), the knife cutter (8) exhibits interlocking sections (14), into which a locking element (17) of hinge lock device (15) can be engaged.

8. Harvester according to the preceding claim 7, wherein each of the interlocking sections (14) exhibits a locking notch (16) and/or projection and the locking element (17) comprises a locking detent which has an engaging section preferably in the form of an engaging roller which can be radially snapped into the respective locking notch and/or onto the respective locking projection.

9. Harvester according to one of the preceding claims, wherein the displacement mechanism is assigned to a safety detachment device, by means of which the knife cutter (8) can be retracted from the respective operational position out of the feeder channel (3) through rotational and/or translatory motion in case of exceeding a predetermined cutting load.

10. Harvester according to the preceding claim 9, wherein the rotational axis (10) of said at least one knife cutter (8) is situated in a manner that allows translatory displacement along the transverse direction to the rotational axis (10) of the knife cutter (8) and the safety detachment device exhibits an actuator of the knife's rotational axis (10) that triggers upon exceeding the predetermined cutting load and allows a translatory displacement of the rotational axis (10) of the knife cutter.

11. Harvester according to the preceding claim 10, wherein the actuator of the knife's rotational axis (10) exhibits a rotational axis holder (20) having a spring mechanism (21) for biasing the knife's rotational axis (10) in a certain operational position and/or a rotational axis lock that is actuated upon exceeding the predetermined cutting load is assigned to the rotational axis holder (20).

12. Harvester according to one of the preceding claims 9 - 11, wherein the safety detachment device exhibits a coupling mechanism, which is present between the actuator for the knife's rotational axis (10) and the hinge lock device (15) and releases the hinge lock device (15) upon triggering of the actuator for the knife's rotational axis (10).

13. Harvester according to one of the preceding claims, wherein the knife sharpener exhibits at least one sharpening tool, a tool guidance as well as a tool actuator by means of which the sharpening tool is able of being moved over the cutting edge (12) of an knife (8) which is in the sharpening position and from one knife cutter to another.

14. Harvester according to the preceding claim 13, wherein the tool actuator exhibits a transverse actuator for displacement of the sharpening tool through the feeder channel (3) and transverse to the feed direction as well as a longitudinal actuator, especially a swivelling actuator for the displacement of the sharpening tool through the feeder channel (3), along a longitudinal plane parallel to the feed direction, as well as along the cutting edge (12) of the knife cutter (8) that is in the sharpening position.

15. Harvester according to one of the two preceding claims, wherein the sharpening tool is suspended at a lever that is mounted to a transverse crossbeam in a displaceable and swivelling manner.

16. Harvester according to one of the preceding claims 13 - 15, wherein the sharpening tool is movably mounted on to a transverse crossbeam that is suspended at a swivelling lever.

17. Harvester according to one of the preceding claims, wherein each of the cutting edges (12) exhibits a cutting length (lₛ) of at least 1/8, preferably at least 1/6 of total circumference of the knife structure (80).

18. Harvester according to one of the preceding claims, wherein the knife cutter (8) forms as a whole an essentially disc-shaped polygon having concavely shaped sides, whereby the number of corners is between three and six.

## Revendications

1. Moissonneuse, notamment chariot de chargement pour recevoir et transporter la moisson ayant un dispositif de réception (2) pour la réception de la moisson, un canal de transport (3) aboutant au dispositif de réception (2), qui mène à un magasin pour la moisson (4), un dispositif de coupage (7) ayant au moins une couteau (8) pour couper la moisson étant transporté au cours de l'opération de chargement par le canal de transport (3), ainsi qu'un dispositif d'aiguisage (25) pour aiguiser le couteau (8), le couteau (8) avançant avec au moins un tranchant (12) dans le canal de transport (3) au cours de l'opération de chargement, et étant monté d'une manière capable à le faire sortir le canal de transport (3) avec le dit tranchant (12) en vue d'aiguisage, **caractérisé en ce que** le couteau (8) présente plusieurs tranchants (12) qui sont disposés d'une manière déplacée autour de son périphérie, et est monté de façon pivotable autour d'un axe (10) de couteau, **en ce que** un dispositif distributeur pour l'avancement rotatif du couteau d'une première position opératoire à une deuxième position opératoire, dans laquelle le tranchant premier se trouve hors du canal de transport (3) dans une position d'aiguisage et un deuxième tranchant se trouve dans le canal de transport (3) dans une position de coupage, sont prévus et **en ce que** le dispositif d'aiguisage (25) est formé d'une manière que le tranchant qui se trouve en position d'aiguisage est aiguisable au cours de l'opération de chargement.

2. Moissonneuse selon la revendication précédente dans laquelle les tranchants (12) du couteau sont courbés en forme bancal-convexe.

3. Moissonneuse selon la revendication précédente dans laquelle les tranchants (12) en position de coupage dans le canal de transport (3) avancent d'une paroi (11) de canal de transport, au travers de laquelle le couteau (8) avance dans le canal de transport (3), en accroissant continu en direction de transport dans le canal de transport (3).

4. Moissonneuse selon la revendication précédente dans laquelle le couteau (8) possède, déplacés en direction périphérique, trois ou plusieurs tranchants (12) et moins de neuf tranchants (12), préférentiellement trois à six tranchants (12) et particulièrement quatre tranchants (12).

5. Moissonneuse selon la revendication précédente dans laquelle les extrémités des tranchants (12) d'un couteau (8) sont disposées sur un cercle commun autours de l'axe rotative (10) du couteau et/ou les tranchants (12) d'un couteau (8) sont disposés en symétrie rotative en relation à l'axe rotative (10) du couteau.

6. Moissonneuse selon la revendication précédente dans laquelle le dispositif de distribution présente un dispositif de verrou de rotation (15) pour le verrouillage de rotation préférentiellement de façon positive d'au moins l'un couteau (8) dans les différentes positions opératoires.

7. Moissonneuse selon la revendication précédente dans laquelle le couteau (8) présente, à son périphérie entre les tranchants (12), des sections de verrouillage (14) avec lesquelles un élément de verrou (17) du dispositif de verrou de rotation (15) est capable de s'engager.

8. Moissonneuse selon la revendication précédente 7 dans laquelle chacune des sections de verrouillage (14) présente un puits d'encliquetage (16) et/ou une saillie d'encliquetage et dans laquelle l'élément de verrou (17) comprend un cliquet avec une section d'engagement, préférentiellement en forme d'un rouleau d'engagement qui est capable d'encliqueter dans le puits d'encliquetage respectif et/ou sur la saillie d'encliquetage respective.

9. Moissonneuse selon l'une des revendications précédentes dans laquelle le dispositif de distribution est muni avec un dispositif de déclenchement de sécurité au moyen duquel le couteau est déplaçable de la position opératoire respective dans une façon rotatoire et/ou translatoire du canal de transport (3) en cas de franchir une charge de tranchant prédéterminée.

10. Moissonneuse selon la revendication précédente 9 dans laquelle l' l'axe rotative (10) du couteau de au moins l'un couteau (8) est monté de façon déplaçable au travers de l'axe rotative (10) et le dispositif de déclenchement de sécurité présente un déclencheur de l'axe rotative (10) du couteau déclenchant le dispositif de déclenchement de sécurité en cas de franchir le charge de tranchant prédéterminée et permettant de déplacement translatoire de l'axe rotative (10) du couteau.

11. Moissonneuse selon la revendication précédente 10 dans laquelle le déclencheur de l'axe rotative du couteau présente un support (20) de l'axe rotative du couteau ayant un moyen de ressorte (21) pour biaiser l'axe rotative (10) du couteau dans une position opératoire et/or le support (20) de l'axe rotative du couteau est muni avec un verrou de l'axe rotative du couteau, qui se déclenche en cas de franchir une charge de tranchant prédéterminée.

12. Moissonneuse selon une des revendications précédentes 9 - 11 dans laquelle le dispositif de déclenchement de sécurité présente un moyen de couplage entre le déclencheur de l'axe rotative du couteau et le dispositif de verrou de rotation (15) qui déclenche le dispositif de verrou de rotation (15) en cas de déclencher le déclencheur de l'axe rotative du couteau.

13. Moissonneuse selon une des revendications précédentes dans laquelle le dispositif d'aiguisage présente au moins un outil d'aiguisage, un guide d'outil ainsi qu'un actuateur pour l'outil au moyen duquel l'outil d'aiguisage est capable de se mettre en mouvement à travers le tranchant (12) d'un couteau, qui se trouve dans la position d'aiguisage, ainsi que de couteau à couteau.

14. Moissonneuse selon la revendication précédente 13 dans laquelle l'actuateur présente une commande transversale pour le mouvement de l'outil d'aiguisage à travers de la direction de transport par voie du canal de transport (3) et un commande longitudinale, particulièrement une commande pivotant, pour le mouvement de l'outil d'aiguisage dans une plaine longitudinale parallèle à la direction de transport par voie du canal de transport (3) le longe du tranchant en position d'aiguisage des couteaux (8).

15. Moissonneuse selon l'une des deux revendications précédentes dans laquelle l'outil d'aiguisage est posé à un balancier qui est montée de façon déplaçable et pivotable à une traverse transversale.

16. Moissonneuse selon l'une des revendications précédentes 13 - 15 dans laquelle l'outil d'aiguisage est monté de façon déplaçable à une traverse transversale qui est posée à un balancier pivotable.

17. Moissonneuse selon l'une des revendications précédentes dans laquelle chacun des tranchants (12) présente une longueur de tranchant (lₛ) d'au moins 1/8, préférentiellement d'au moins de 1/6 de la longueur périphérique du corps du couteau (80).

18. Moissonneuse selon l'une des revendication précédente dans laquelle le couteau (8) forme tout ensemble essentiellement une polygone en forme de plaque ayant des côtés concavement courbées et les nombre des sommets étant entre trois et six.
